(19) Europäisches Patentamt
European Patent Office
Office européen des brevets

(11) **EP 2 298 651 B1**

(12) **EUROPÄISCHE PATENTSCHRIFT**

(45) Veröffentlichungstag und Bekanntmachung des
Hinweises auf die Patenterteilung:
**25.02.2015 Patentblatt 2015/09**

(51) Int Cl.:
***B65B 21/00*** *(2006.01)*

(21) Anmeldenummer: **10008494.6**

(22) Anmeldetag: **14.08.2010**

(54) **Verfahren und Vorrichtung zur Gruppierung von Artikeln**

Method and device for grouping items

Procédé et dispositif destinés au groupement d'articles

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**

(30) Priorität: **11.09.2009 DE 102009043989**

(43) Veröffentlichungstag der Anmeldung:
**23.03.2011 Patentblatt 2011/12**

(73) Patentinhaber: **Krones AG**
**93073 Neutraubling (DE)**

(72) Erfinder:
• **Bauer, Martin**
**93073 Neutraubling (DE)**
• **Rausch, Karl**
**93073 Neutraubling (DE)**

(74) Vertreter: **Benninger, Johannes**
**Benninger Patentanwaltskanzlei
Dr.-Leo-Ritter-Strasse 5
93049 Regensburg (DE)**

(56) Entgegenhaltungen:
**EP-A1- 0 703 167        EP-A1- 1 932 782
WO-A1-2007/137923**

**Beschreibung**

Die vorliegende Erfindung betrifft ein Verfahren zur Gruppierung von Artikeln mit den Merkmalen des Oberbegriffs des Anspruchs 1. Die Erfindung betrifft weiterhin eine entsprechende Vorrichtung zur Gruppierung von Artikeln mit den Merkmalen des Oberbegriffs des Anspruchs 9.

Bei der kontinuierlichen horizontalen Förderung von Artikeln mittels Bandförderern o. dgl. werden die Artikel meist in einer ununterbrochenen Reihe zu aufeinander folgenden Behandlungs- und/oder Handhabungsstationen gefördert. Sollen die Artikel ab einem bestimmten Zeitpunkt gruppenweise bearbeitet werden, bspw. um eine Gebindegruppe zusammenzustellen, so ist eine Abtrennung der gewünschten Anzahl von Artikeln aus dem ununterbrochenen und meist weitgehend lückenlosen Artikelstrom erforderlich.

Bekannte Gruppierungselemente sehen bspw. sog. Einteilfinger vor, die von unten in den Förderstrom eintauchen und durch Zurückhalten einer definierten Anzahl von Artikeln gegenüber einem sich schneller bewegenden Förderband oder ggf. auch durch Beschleunigen gegenüber dem sich langsamer bewegenden Förderband für die Herstellung einer definierten Lücke zwischen den gruppierten Artikeln sorgen können. Solche Gruppierungsverfahren werden bspw. bei der Förderung von Getränkebehältern eingesetzt. Da die Getränkebehälter meist in Fördergassen bewegt werden, die eine Breite aufweisen, die dem maximalen Durchmesser der Behälter entspricht, steht nur sehr wenig Raum für das Einführen der Einteilfinger zur Verfügung. So tauchen die Einteilfinger normalerweise in Lücken am seitlichen Rand zwischen zwei benachbarten Getränkebehältern ein, da hierbei durch die runde oder mit abgerundeten Ecken ausgebildete Kontur der Behälter eine Lücke zum Platzieren der Einteilfinger zur Verfügung steht.

Die DE 29 29 973 A1 offenbart eine Vorrichtung zum intermittierenden Zuführen von in Verpackungsmaschinen zu verpackenden Gegenständen. Die Vorrichtung weist einen unteren und einen oberen Förderer auf, welche angehalten und in Bewegung versetzt werden können. Hierdurch wird eine paketweise Weiterführung von Gegenständen ermöglicht. Beim Transport von instabilen Gegenständen wie bspw. Flaschen kann es bei höheren Verfahrensgeschwindigkeiten im Verlauf der Weitergabe unter Umständen zum Kippen von Gegenständen kommen.

Die EP 1 932 782 A1 offenbart eine Vorrichtung zur Gruppierung von Gegenständen, die über diverse Förderbänder geführt werden, wobei sowohl die Geschwindigkeit der Gegenstände gegenüber den Förderbändern wie auch die Geschwindigkeiten der einzelnen Förderbänder zueinander unterschiedlich sein kann.

Eine weitere Gruppiervorrichtung ist in der WO 2007/137923 A1 offenbart. Bei dieser bekannten Vorrichtung sind mehrere Förderbänder hintereinander angeordnet. Auf den Förderbändern werden Artikel befördert, die jeweils einen Abstand voneinander aufweisen. Einem der Förderbänder ist eine Einteileinrichtung zugeordnet, die umlaufende Einteilstege aufweist, die jeweils von oben zwischen ununterbrochen aufeinander folgende Artikel eintauchen und durch gezielte Verzögerung eines der Artikel gegenüber dem schneller laufenden Förderband für das Schließen der zuvor bestehenden Lücke zum nachfolgenden Artikel sorgen können. Die zuvor bestehenden Abstände zwischen den Artikeln werden auf diese Weise aufgehoben, wodurch die Artikel gruppiert werden.

Durch EP 0 703 167 A1 ist zur Gruppierung von Artikeln, welche mittels eines sich mit einer ersten Geschwindigkeit bewegenden ersten Förderelements in einer ununterbrochenen Reihe zu einem zweiten Förderelement befördert werden, das sich mit einer zweiten Geschwindigkeit bewegt, die größer ist als die erste Geschwindigkeit des ersten Förderelements, bekannt, dass dem zweiten Förderelement eine Rückhalteeinrichtung zur Abtrennung einer definierten Anzahl von Artikeln unter Ausbildung einer Lücke zwischen aufeinander folgenden Artikelgruppen und unter Verzögerung der abgetrennten Artikelgruppe gegenüber der jeweils vorauseilenden Artikelgruppe zugeordnet ist. Eine entsprechende Vorrichtung zur Gruppierung von Artikeln umfasst ein erstes Förderelement und ein diesem nachgeordnetes und sich schneller bewegendes zweites Förderelement. Die Vorrichtung ist mit einer dem zweiten Förderelement zugeordneten Rückhalteeinrichtung zur Abtrennung einer definierten Anzahl von Artikeln unter Ausbildung einer Lücke zwischen aufeinander folgenden Artikelgruppen und unter Verzögerung der abgetrennten Artikelgruppe gegenüber der jeweils vorauseilenden Artikelgruppe ausgestattet. Die Rückhalteeinrichtung umfasst erste Einteilstege, die von unten zwischen die Artikel eintauchen und über eine definierte Strecke in Förderrichtung der Förderelemente bewegt werden. Nach der Gruppierung von Artikeln werden die Artikelgruppen mittels einer eigens hierfür vorgesehenen Fördereinrichtung zu einer Verpackungsstation transportiert, wobei während diesen Transports vermittels der eigens hierfür vorgesehenen Fördereinrichtung die Artikelgruppen durch von oben zwischen die Artikelgruppen eintauchende zweite Einteilstege begleitet werden. Die ersten Einteilstege werden nach dem Eintauchen von unten zwischen aufeinander folgende Artikel zunächst gegenüber dem zweiten Förderband verzögert bewegt und nach Ausbildung einer definierten Lücke über die Geschwindigkeit des zweiten Förderbandes beschleunigt, bevor sie aus dem Eingriffsbereich mit den Artikeln nach unten weggezogen werden. Die Bewegungsgeschwindigkeit der ersten Einteilstege wird variabel gesteuert. Die Rückhalteeinrichtung weist mehrere erste Einteilstege auf, die mittels umlaufender Endloszugmittel oberhalb einer Förderebene der Förderelemente geführt werden. Die Rückhalteeinrichtung weist wenigstens zwei unabhängig voneinander, jedoch parallel zueinander umlaufende Endloszugmittel auf, die jeweils die ersten Einteilstege führen und bewegen. Die wenigstens zwei Endloszugmittel werden zur Erzielung einer variablen Geschwindigkeit der ersten Einteilstege über ihre Bewegungsbahn jeweils mit variabler Antriebsgeschwindigkeit angetrieben.

Durch WO 2007/137923 A1 ist eine Vorrichtung zur Gruppierung von in gleichmäßigen Abständen aufeinander folgenden Artikelgruppen bekannt. Diese umfasst von oben zwischen aufeinanderfolgende Artikelgruppen eintauchende Einteilstege, die an beidseits umlaufenden Endloszugmitteln oberhalb einer Förderebene der Förderelemente in einer geschlossenen Kurve geführt werden. Bei der Vorrichtung sind mehrere Förderbänder hintereinander angeordnet. Auf den Förderbändern werden Artikelgruppen befördert, die jeweils einen Abstand voneinander aufweisen. Einem der Förderbänder ist eine Einteileinrichtung zugeordnet, welche die umlaufende Einteilstege aufweist, die jeweils von oben zwischen den in gleichmäßigen Abständen aufeinander folgenden Artikelgruppen eintauchen und durch gezielte Verzögerung einer der Artikelgruppen gegenüber dem schneller laufenden Förderband für das Schließen der zuvor bestehenden Lücke zu einer oder mehreren nachfolgenden Artikelgruppen sorgen können. Die zuvor bestehenden Abstände zwischen den Artikelgruppen werden auf diese Weise aufgehoben, wodurch die Artikelgruppen gruppiert werden. Die Bewegung der Einteilstege ist so gesteuert, dass diese in einer Warteposition bereit gehalten werden, aus der sie einzeln in eine Arbeitsposition entlassen werden, welche Arbeitsposition an einem Startpunkt eines aktiven Abschnitts der von den umlaufenden Endloszugmitteln oberhalb der Förderebene des Förderelements beschriebenen, geschlossenen Kurve liegt. In dieser Arbeitsposition liegt ein entsprechender Einteilsteg vor den zu gruppierenden Artikelgruppen. In der Arbeitsposition beginnend wird der Einteilsteg entlang des aktiven Abschnitts der geschlossenen Kurve mit einer Geschwindigkeit bewegt, die kleiner ist, als die Geschwindigkeit des Förderelements. Nach dem Ende des aktiven Abschnitts der geschlossenen Kurve wird der Einteilsteg über den verbleibenden Teil der geschlossenen Kurve schnell wieder in die Warteposition befördert.

Ein Ziel der vorliegenden Erfindung besteht darin, ein möglichst einfach aufgebautes und zuverlässig arbeitendes Verfahren zum Gruppieren von Artikeln sowie eine entsprechende Gruppiervorrichtung zur Verfügung zu stellen. Das Gruppierverfahren soll hohe Verarbeitungsgeschwindigkeiten ermöglichen, ohne dass die Gefahr besteht, dass einzelne Artikel durch das Gruppieren ins Kippen gebracht werden.

Diese Ziele der Erfindung werden mit den Gegenständen der unabhängigen Patentansprüche erreicht, wobei sich Merkmale vorteilhafter Weiterbildungen der Erfindung aus den jeweiligen abhängigen Ansprüchen ergeben.

Die Erfindung betrifft ein Verfahren zur Gruppierung von Artikeln, bei dem die Artikel mittels eines, sich mit einer ersten Geschwindigkeit bewegenden ersten Förderelements in einer ununterbrochenen Reihe zu einem zweiten Förderelement befördert werden, das sich mit einer zweiten Geschwindigkeit bewegt, die größer ist als die erste Geschwindigkeit des ersten Förderelements. Dem zweiten Förderelement ist eine Rückhalteeinrichtung zur Abtrennung einer definierten Anzahl von Artikeln unter Ausbildung einer Lücke zwischen aufeinander folgenden Artikelgruppen und unter Verzögerung der abgetrennten Artikelgruppe gegenüber der jeweils vorauseilenden Artikelgruppe zugeordnet. Diese Rückhalteeinrichtung umfasst geeignete Trennelemente, vorzugsweise in Gestalt von horizontal angeordneten Einteilstegen, die von oben zwischen die Artikel eintauchen und über eine definierte Strecke in Förderrichtung der Förderelemente bewegt werden. Die Einteilstege liegen hierbei quer zur Transportrichtung der Artikel, und werden von oben zwischen die Artikel eingeführt und nach Herstellen eines gewünschten Abstandes wieder nach oben herausgehoben. Die Einteilstege werden hierbei nach dem Eintauchen zwischen aufeinander folgende Artikel zunächst gegenüber dem zweiten Förderband verzögert bewegt und nach Ausbildung einer definierten Lücke über die Geschwindigkeit des zweiten Förderbandes beschleunigt, bevor sie nach oben aus dem Eingriffsbereich mit den Artikeln gehoben werden.

Um die gewünschte Lücke zwischen den zunächst ununterbrochen beförderten Artikel herstellen zu können, wird die Bewegungsgeschwindigkeit der Einteilstege variabel gesteuert. Die Rückhalteeinrichtung umfasst mehrere Einteilstege, die mittels umlaufender Endloszugmittel oberhalb einer Förderebene der Förderelemente in einer geschlossenen Kurve geführt werden. Jeweils aufeinander folgende Einteilstege werden in unterschiedlicher bzw. variabler Relativgeschwindigkeit zueinander geführt, wodurch die exakte Lückenbildung ermöglicht wird.

Gemäß einer Ausführungsvariante des erfindungsgemäßen Verfahrens weist die Rückhalteeinrichtung wenigstens zwei unabhängig voneinander, jedoch parallel zueinander umlaufende Endloszugmittel auf, die jeweils die Einteilstege führen und bewegen. Die wenigstens zwei Endloszugmittel können zur Erzielung einer variablen Geschwindigkeit der Einteilstege über ihre Bewegungsbahn jeweils mit variabler Antriebsgeschwindigkeit angetrieben und/oder über Kurvenscheiben angesteuert werden.

Neben den zuvor beschriebenen unterschiedlichen Ausführungsformen des erfindungsgemäßen Verfahrens betrifft die Erfindung weiterhin eine Vorrichtung zur Gruppierung von Artikeln, die insbesondere zur Durchführung eines Gruppierverfahrens gemäß einer der zuvor beschriebenen Ausführungsvarianten dient. Die Gruppiervorrichtung umfasst ein erstes Förderelement, ein diesem nachgeordnetes und sich schneller als das erste Förderelement bewegendes zweites Förderelement sowie eine dem zweiten Förderelement zugeordnete Rückhalteeinrichtung zur Abtrennung einer definierten Anzahl von Artikeln unter Ausbildung einer Lücke zwischen aufeinander folgenden Artikelgruppen und unter Verzögerung der abgetrennten Artikelgruppe gegenüber der jeweils vorauseilenden Artikelgruppe. Diese Rückhalteeinrichtung umfasst Einteilstege, die von oben zwischen die Artikel eintauchen und über eine definierte Strecke in Förderrichtung der Förderelemente bewegbar sind, wobei eine Bewegungsgeschwindigkeit der Einteilstege variabel steuerbar ist.

Die Einteilstege werden nach dem Eintauchen zwischen aufeinander folgende Artikel zunächst gegenüber dem zweiten Förderband verzögert bewegt. Nach Ausbildung einer definierten Lücke werden die Einteilstege über die Geschwindigkeit des zweiten Förderbandes beschleunigt, bevor sie nach oben aus dem Eingriffsbereich mit den Artikeln gehoben werden.

Die Rückhalteeinrichtung umfasst mehrere Einteilstege, die mittels umlaufender Endloszugmittel oberhalb einer Förderebene der Förderelemente in einer geschlossenen Kurve geführt sind. Dabei sind jeweils aufeinander folgende Einteilstege in unterschiedlicher bzw. variabler Relativgeschwindigkeit zueinander führbar.

Gemäß einer bevorzugten Ausführungsvariante der erfindungsgemäßen Vorrichtung weist die Rückhalteeinrichtung wenigstens zwei unabhängig voneinander, jedoch parallel zueinander umlaufende Endloszugmittel auf, die jeweils die Einteilstege führen und bewegen. Diese wenigstens zwei Endloszugmittel sind zur Erzielung einer variablen Geschwindigkeit der Einteilstege über ihre Bewegungsbahn jeweils mit variabler Antriebsgeschwindigkeit antreibbar und/oder über Kurvenscheiben ansteuerbar.

Wenn im vorliegenden Zusammenhang von jeweils einem Zugmittel die Rede ist, an dem die Einteilstege geführt sind, so können dies insbesondere auch jeweils zwei synchron umlaufende Zugmittel bzw. ein Zugmittelpaar sein, die beidseitig eines Förderbandes umlaufen und zur parallelen Führung der zwischen ihnen befestigten und geführten Einteilstege dienen. Das zweite Zugmittel bzw. zweite Zugmittelpaar läuft parallel, jedoch in seiner variablen Umlaufgeschwindigkeit unabhängig vom ersten Zugmittel bzw. ersten Zugmittelpaar um. Auch dieses Zugmittelpaar umfasst vorzugsweise zwei beidseitig des Förderbandes angeordnete Zugmittel, zwischen denen die Einteilstege geführt und befestigt sind.

Alternativ zu den beiden Endloszugmitteln, die in unterschiedlicher und variabler Relativgeschwindigkeit zueinander umlaufend geführt sein können, wäre es auch denkbar, mit nur einem Zugmittelpaar zu arbeiten, an dem die Einteilstege jeweils einseitig aufgehängt sind, so dass aufeinander folgende Einteilstege jeweils in unterschiedlicher Geschwindigkeit geführt und bewegt werden können.

Mit Zugmittel ist im vorliegenden Zusammenhang bspw. eine Glieder-, Rollen- oder Laschenkette o. dgl. gemeint, die über mehrere Zahnräder und/oder geeignete Rollen in einer umlaufenden Bahn geführt und angetrieben wird. Als Zugmittel eignen sich auch endlos über Umlenkrollen geführte und angetriebene Bänder oder Riemen, bspw. Keilriemen, Zahnriemen o. dgl., an denen die Einteilstege in geeigneter Weise befestigt sind.

Nachfolgen werden Ausführungsbeispiele die Erfindung und ihre Vorteile anhand der beigefügten Figuren näher erläutert. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Seitenansicht einer Vorrichtung zur Gruppierung von Artikeln anhand einer Flaschengruppierung in einem ersten Verfahrensschritt.

Fig. 2 zeigt einen weiteren Verfahrensschritt bei der Gruppierung der Flaschen.

Fig. 3 zeigt einen dritten Verfahrensschritt bei der Gruppierung der Flaschen.

Fig. 4 zeigt einen vierten Verfahrensschritt bei der Gruppierung der Flaschen.

Fig. 5 zeigt einen fünften Verfahrensschritt bei der Gruppierung der Flaschen.

Die folgende detaillierte Beschreibung einer möglichen Ausführungsform der Erfindung dient als nicht einschränkendes Beispiel und nimmt auf die beigefügten Zeichnungen Bezug. Gleiche Bauteile weisen dabei grundsätzlich gleiche Bezugszeichen auf und werden teilweise nicht mehrfach erläutert.

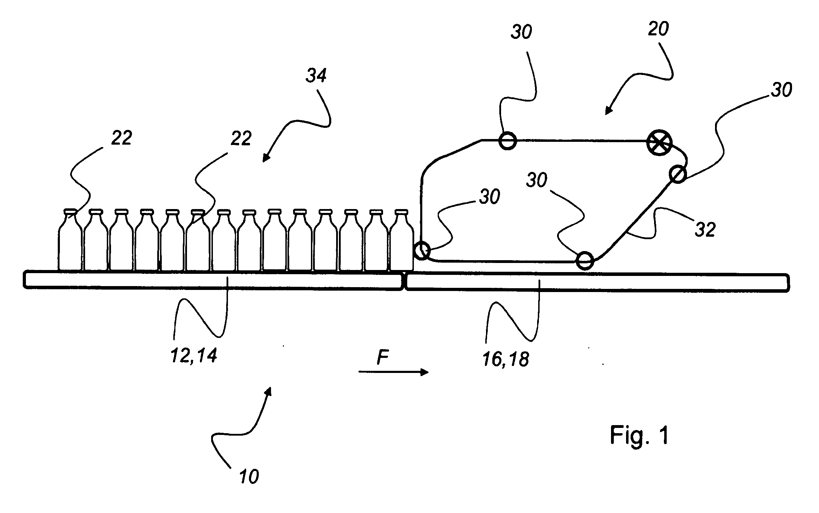

Die Figuren 1 bis 5 zeigen in schematischer Darstellung eine schematische Seitenansicht einer Vorrichtung 10 zur Gruppierung von Artikeln anhand einer Flaschengruppierung in fünf aufeinander folgenden Prozessschritten. Die Gruppiervorrichtung 10 umfasst ein erstes Förderelement 12 in Gestalt eines ersten Förderbandes 14, ein diesem nachgeordnetes und sich schneller als das erste Förderband 14 bewegendes zweites Förderelement 16 in Gestalt eines zweiten Förderbandes 18 sowie eine dem zweiten Förderband 18 zugeordnete Rückhalteeinrichtung 20 zur Abtrennung einer definierten Anzahl von Artikeln - hier aufrecht stehenden Flaschen 22 - unter Ausbildung einer Lücke 24 zwischen aufeinander folgenden Flaschengruppen 26, 28 und unter Verzögerung der abgetrennten Flaschengruppe 26 gegenüber der jeweils vorauseilenden Flaschengruppe 28. Die Rückhalteeinrichtung 20 bewegt und führt mehrere Einteilstege 30, die von oben zwischen die Flaschen 22 eintauchen und über eine definierte Strecke in Förderrichtung F der Förderbänder 14 und 18 bewegbar sind. Die Bewegungsgeschwindigkeiten der Einteilstege 30 sind gemäß nachfolgend näher beschriebener Vorschrift variabel steuerbar. Die Rückhalteeinrichtung 20 umfasst mehrere Einteilstege 30, die mittels umlaufender Endloszugmittel 32 oberhalb einer Förderebene des zweiten Förderbandes 18 in einer geschlossenen Kurve geführt sind. Dabei sind jeweils aufeinander folgende Einteilstege 30 in unterschiedlicher bzw. variabler Relativgeschwindigkeit zueinander geführt.

Was anhand der Figuren 1 bis 5 nicht erkennbar ist, jedoch für die variablen Geschwindigkeiten der Einteilstege 30 unabdingbar ist, weist die Rückhalteeinrichtung 20 zwei unabhängig voneinander, jedoch parallel zueinander umlaufende Endloszugmittel 32 auf, die jeweils die Einteilstege 30 führen und bewegen. Diese beiden Endloszugmittel 32 sind zur Erzielung einer variablen Geschwindigkeit der Einteilstege 30 über ihre Bewegungsbahnen jeweils mit variabler Antriebsgeschwindigkeit antreibbar oder bspw. über geeignet geformte Kurvenscheiben (nicht dargestellt) ansteuerbar.

Wenn im vorliegenden Zusammenhang von jeweils einem Zugmittel 32 die Rede ist, an dem die Einteilstege 30 geführt sind, so können dies insbesondere auch jeweils zwei synchron umlaufende Zugmittel 32 bzw. ein Zugmittelpaar sein, die beidseitig des Förderbandes 18 umlaufen und zur parallelen Führung der zwischen ihnen befestigten und geführten Einteilstege 30 dienen. Das zweite Zugmittel 32 bzw. zweite Zugmittelpaar läuft parallel, jedoch in seiner variablen Umlaufgeschwindigkeit unabhängig vom ersten Zugmittel 32 bzw. ersten Zugmittelpaar um. Auch dieses Zugmittelpaar umfasst vorzugsweise zwei beidseitig des Förderbandes 18 angeordnete Zugmittel 32, zwischen denen die Einteilstege 30 geführt und befestigt sind.

Mit Zugmittel 32 ist im vorliegenden Zusammenhang bspw. eine Glieder-, Rollen- oder Laschenkette o. dgl. gemeint, die über mehrere Zahnräder und/oder geeignete Rollen in einer umlaufenden Bahn geführt und angetrieben wird. Als Zugmittel 32 eignen sich auch endlos über Umlenkrollen geführte und angetriebene Bänder oder Riemen, bspw. Keilriemen, Zahnriemen o. dgl., an denen die Einteilstege 30 in geeigneter Weise befestigt sind.

Die Darstellung der Fig. 1 zeigt den Anfangszustand, bei der eine ununterbrochene Reihe 34 von Flaschen 22 auf dem ersten Förderband 14 mit der ersten Fördergeschwindigkeit $v_{F1}$ in Förderrichtung F bewegt werden. Der erste Einteilsteg 30a liegt dabei kurzzeitig an der ersten Flasche 22 der ununterbrochenen Reihe 34 an und sorgt dafür, dass diese Flasche 22 beim Übertritt auf das schneller laufende zweite Förderband 18 nicht unmittelbar beschleunigt, sondern kontrolliert zurückgehalten wird. Zu jedem betrachteten Zeitpunkt gilt hierbei, dass die zweite Fördergeschwindigkeit $v_{F2}$ des zweiten Förderbandes 18 größer ist als die erste Fördergeschwindigkeit $v_{F1}$ des ersten Förderbandes 14, so dass gilt:

$$v_{F2} > v_{F1}.$$

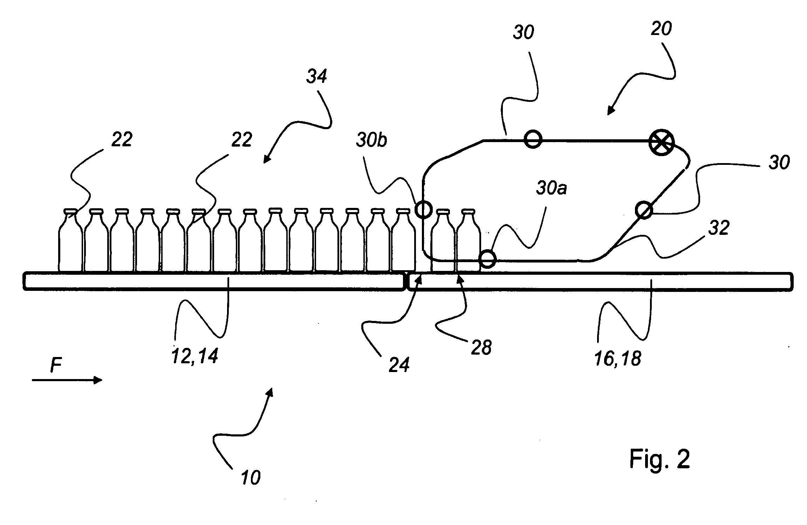

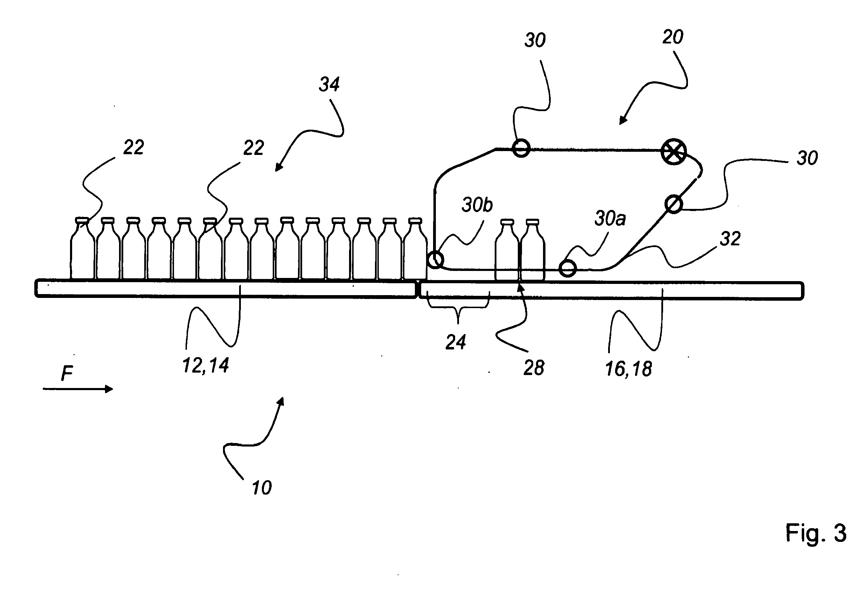

In der Darstellung der Fig. 2 ist erkennbar, dass die Flaschen 22 paarweise gruppiert werden. Die Flaschengruppe 28 wird zwar von der Reihe 34 abgetrennt, da die zweite Fördergeschwindigkeit $v_{F2}$ schneller ist und dadurch für eine Beschleunigung sorgt. Doch sorgt gleichzeitig der erste Einteilsteg 30a für eine leichte Verzögerung der Flaschengruppe 28 gegenüber dem laufenden zweiten Förderband 18. Die gebildete Lücke 24 muss mindestens so breit sein, dass der zweite Einteilsteg 30b von oben in die Lücke 24 eintauchen kann; vgl. Fig. 2. Während die der Flaschengruppe 28 nachfolgende Flasche 22 bei ihrem Übertritt auf das zweite Förderband 18 in einer der Fig. 1 entsprechenden Weise abgebremst wird, wird der erste Einteilsteg 30a gegenüber der Flaschengruppe 28 beschleunigt und löst sich von dieser ab; vgl. Fig. 3. In dieser Darstellung wird unmittelbar deutlich, dass der erste Einteilsteg 30a und der zweite Einteilsteg 30b mit unterschiedlichen Geschwindigkeitsverläufen geführt werden und somit vorzugsweise jeweils unterschiedlichen Antriebszugmitteln 32 zuzuordnen sind.

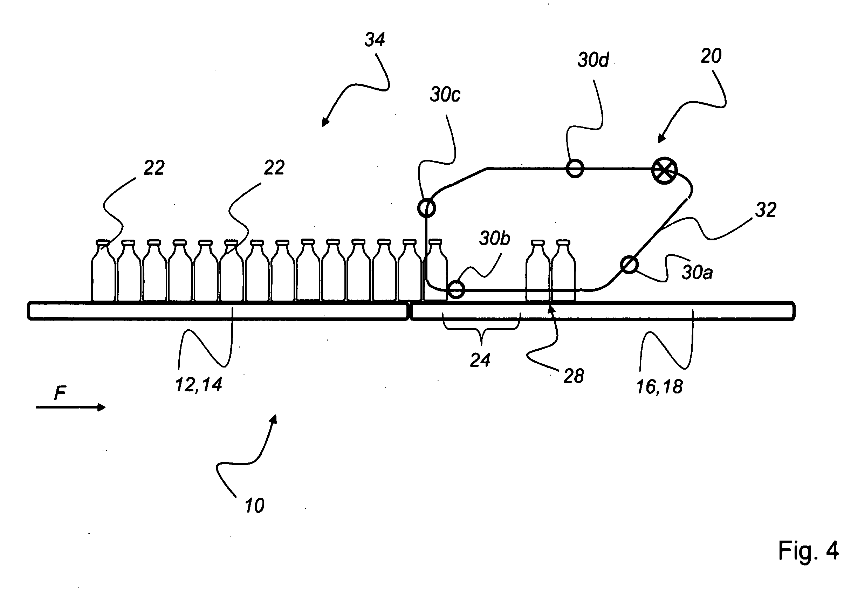

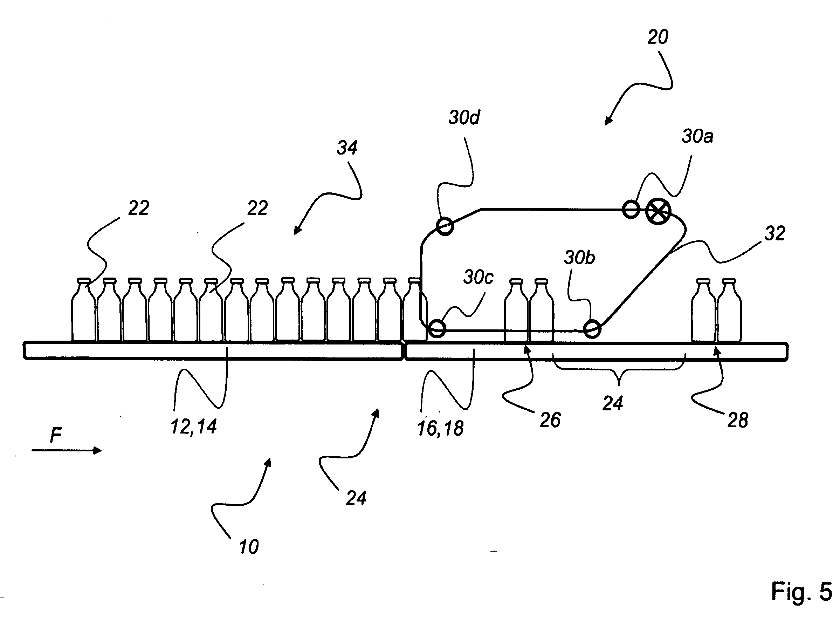

Die Darstellungen der Figuren 4 und 5 verdeutlicht den darauffolgenden Schritt der Ablösung der nächst folgenden Flaschengruppe 26 auf dem zweiten Förderband 18. Der dritte Einteilsteg 30c kann hierbei synchron zur Geschwindigkeit des ersten Einteilsteges 30a geführt und damit mit einem gemeinsamen Zugmittel 32 angetrieben werden, während der vierte Einteilsteg 30d synchron zur Geschwindigkeit des zweiten Einteilsteges 30b geführt und damit wiederum mit einem gemeinsamen Zugmittel 32 angetrieben werden kann.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

**Bezugszeichenliste**:

| | |
|---|---|
| 10 | Gruppiervorrichtung |
| 12 | erstes Förderelement |
| 14 | erstes Förderband |
| 16 | zweites Förderelement |
| 18 | zweites Förderband |
| 20 | Rückhalteeinrichtung |
| 22 | Flasche |
| 24 | Lücke |
| 26 | Flaschengruppe |
| 28 | Flaschengruppe |
| 30 | Einteilsteg |
| 30a | erster Einteilsteg |
| 30b | zweiter Einteilsteg |
| 30c | dritter Einteilsteg |
| 30d | vierter Einteilsteg |
| 32 | Endloszugmittel |
| 34 | Ununterbrochene Reihe |

F     Förderrichtung

$v_{F1}$     erste Fördergeschwindigkeit

$v_{F2}$     zweite Fördergeschwindigkeit

**Patentansprüche**

1. Verfahren zur Gruppierung von Artikeln, bei dem die Artikel mittels eines, sich mit einer ersten Geschwindigkeit ($v_{F1}$) bewegenden ersten Förderelements (12) in einer ununterbrochenen Reihe (34) zu einem zweiten Förderelement (16) befördert werden, das sich mit einer zweiten Geschwindigkeit ($v_{F2}$) bewegt, die größer ist als die erste Geschwindigkeit ($v_{F1}$) des ersten Förderelements (12), wobei dem zweiten Förderelement (16) eine Einteilstege (30) umfassende Rückhalteeinrichtung (20) zur Abtrennung einer definierten Anzahl von Artikeln unter Ausbildung einer Lücke (24) zwischen aufeinander folgenden Artikelgruppen (26, 28) und unter Verzögerung der abgetrennten Artikelgruppe (26) gegenüber der jeweils vorauseilenden Artikelgruppe (28) zugeordnet ist, wobei die Bewegungsgeschwindigkeit der Einteilstege (30) variabel gesteuert wird **dadurch gekennzeichnet, dass**:

   - die Einteilstege (30) von oben zwischen die Artikel eintauchen und über eine definierte Strecke in Förderrichtung (F) der Förderelemente (12, 16) bewegt werden,
   - die Einteilstege (30) nach dem Eintauchen zwischen aufeinander folgende Artikel zunächst gegenüber dem zweiten Förderband (16) verzögert bewegt und nach Ausbildung einer definierten Lücke (24) über die Geschwindigkeit (vF2) des zweiten Förderbandes (18) beschleunigt werden, bevor sie nach oben aus dem Eingriffsbereich mit den Artikeln gehoben werden,
   - die Rückhalteeinrichtung (20) mehrere Einteilstege (30) aufweist, die mittels umlaufender Endloszugmittel (32) oberhalb einer Förderebene der Förderelemente (12, 16) in einer geschlossenen Kurve geführt werden, und
   - jeweils aufeinander folgende Einteilstege (30) in unterschiedlicher bzw. variabler Relativgeschwindigkeit zueinander geführt werden.

2. Verfahren nach Anspruch 1, bei dem die Rückhalteeinrichtung (20) wenigstens zwei unabhängig voneinander, jedoch parallel zueinander umlaufende Endloszugmittel (32) aufweist, die jeweils die Einteilstege (30) führen und bewegen.

3. Verfahren nach einem der Ansprüche 1 oder 2, bei dem die wenigstens zwei Endloszugmittel (32) zur Erzielung einer variablen Geschwindigkeit der Einteilstege (30) über ihre Bewegungsbahn jeweils mit variabler Antriebsgeschwindigkeit angetrieben und/oder über Kurvenscheiben angesteuert werden.

4. Vorrichtung zur Gruppierung von Artikeln, mit einem ersten Förderelement (12) und einem diesem nachgeordneten und sich schneller bewegenden zweiten Förderelement (16), und mit einer dem zweiten Förderelement (16) zugeordneten Rückhalteeinrichtung (20) zur Abtrennung einer definierten Anzahl von Artikeln unter Ausbildung einer Lücke (24) zwischen aufeinander folgenden Artikelgruppen (26,28) und unter Verzögerung der abgetrennten Artikelgruppe (28) gegenüber der jeweils vorauseilenden Artikelgruppe (26), **dadurch gekennzeichnet, dass**:

   - die Rückhalteeinrichtung (20) Einteilstege (30) umfasst, die von oben zwischen die Artikel eintauchen und über eine definierte Strecke in Förderrichtung (F) der Förderelemente bewegbar sind, wobei eine Bewegungsgeschwindigkeit der Einteilstege (30) variabel steuerbar ist,
   - die Einteilstege (30) nach dem Eintauchen zwischen aufeinander folgende Artikel zunächst gegenüber dem zweiten Förderband (16) verzögert bewegt und nach Ausbildung einer definierten Lücke (24) über die Geschwindigkeit (vF2) des zweiten Förderbandes (18) beschleunigt werden, bevor sie nach oben aus dem Eingriffsbereich mit den Artikeln gehoben werden,
   - die Rückhalteeinrichtung (20) mehrere Einteilstege (30) umfasst, die mittels umlaufender Endloszugmittel (32) oberhalb einer Förderebene der Förderelemente in einer geschlossenen Kurve geführt sind, und
   - jeweils aufeinander folgende Einteilstege (30) in unterschiedlicher bzw. variabler Relativgeschwindigkeit zueinander führbar sind.

5. Vorrichtung nach Anspruch 4, bei der die Rückhalteeinrichtung (20) wenigstens zwei unabhängig voneinander, jedoch parallel zueinander umlaufende Endloszugmittel (32) aufweist, die jeweils die Einteilstege (30) führen und bewegen.

6. Vorrichtung nach Anspruch 4 oder 5, bei der die wenigstens zwei Endloszugmittel (32) zur Erzielung einer variablen Geschwindigkeit der Einteilstege (30) über ihre Bewegungsbahn jeweils mit variabler Antriebsgeschwindigkeit antreibbar und/oder über Kurvenscheiben ansteuerbar sind.

**Claims**

1. A method for grouping articles wherein the articles are conveyed in an uninterrupted row (34) by means of a first conveying element (12), which moves at a first speed ($V_{F1}$), to a second conveying element (16), which moves at a second speed ($V_{F2}$), which second speed is greater than the first speed ($V_{F1}$) of the first conveying element (12), wherein the second conveying element (16) is associated with a retaining device (20), which comprises divider ridges (30), for detaching a defined number of articles from the others, thereby forming a gap (24) between consecutive article groups (26, 28), and thereby slowing down the detached article group (26) in relation to the article group (28) respectively running ahead, wherein the speed of movement of the divider ridges (30) can be variably controlled, **characterised in that**:

   - the divider ridges (30) insert between the articles from above and are moved along a defined distance in the conveying direction (F) of the conveying elements (12, 16),
   - the divider ridges (30), after inserting between consecutive articles, are first moved with a delay in relation to the second conveyor belt (16) and, after forming a defined gap (24), they are accelerated to a speed greater than the speed ($V_{F2}$) of the second conveyor belt (18) before they are lifted out of the area of insertion between the articles,
   - the retaining device (20) has several divider ridges (30), which are guided in a closed loop above a conveying plane of the conveying elements (12, 16) by means of circulating endless traction means (32), and
   - respectively consecutive divider ridges (30) are guided at different or variable relative speeds in respect to each other.

**2.** The method as recited in claim 1 wherein the retaining device (20) has at least two endless traction means (32), which circulate mutually independently but in parallel to each other, and which each guide and move the divider ridges (30).

**3.** The method as recited in one of the claims 1 or 2 wherein the at least two endless traction means (32) are each driven and/or controlled at a variable drive speed by cam plates for the purpose of achieving a speed of the divider ridges (30) that is variable along their trajectory path.

**4.** An apparatus for grouping articles, having a first conveying element (12) and, arranged downstream thereof and moving faster, a second conveying element (16), and having a retaining device (20), which is associated with the second conveying element (16), for detaching a defined number of articles from the others, thereby forming a gap (24) between consecutive article groups (26, 28), and thereby slowing down the detached article group (28) in relation to the article group (26) respectively running ahead, **characterised in that**:

   - the retaining device (20) comprises divider ridges (30), which insert between the articles from above and are movable along a defined distance in the conveying direction (F) of the conveying elements, wherein a speed of movement of the divider ridges (30) is variably controllable,
   - the divider ridges (30), after inserting between consecutive articles, are first moved with a delay in relation to the second conveyor belt (16) and, after forming a defined gap (24), they are accelerated to a speed greater than the speed ($V_{F2}$) of the second conveyor belt (18) before they are lifted out of the area of insertion between the articles,
   - the retaining device (20) comprises several divider ridges (30), which are guided in a closed loop above a conveying plane of the conveying elements by means of circulating endless traction means (32), and
   - respectively consecutive divider ridges (30) are guidable at different or variable relative speeds in respect to each other.

**5.** The apparatus as recited in claim 4 wherein the retaining device (20) has at least two endless traction means (32), which circulate mutually independently but in parallel to each other, and which each guide and move the divider ridges (30).

**6.** The apparatus as recited in one of the claims 4 or 5 wherein the at least two endless traction means (32) are each drivable and/or controllable at a variable drive speed by cam plates for the purpose of achieving a speed of the divider ridges (30) that is variable along their trajectory path.

**Revendications**

**1.** Procédé de groupement d'articles, dans lequel les articles sont transportés en une rangée continue (34) au moyen d'un premier élément de transport (12) se déplaçant à une première vitesse ($v_{F1}$), vers un deuxième élément de transport (16) qui se déplace à une deuxième vitesse ($v_{F2}$) supérieure à la première vitesse ($v_{F1}$) du premier élément de transport (12), audit deuxième élément de transport (16) étant associé un dispositif de retenue (20) comprenant des entretoises de division (30) et destiné à séparer un nombre défini d'articles en formant une lacune (24) entre des groupes d'articles (26, 28) successifs et en ralentissant le groupe d'articles (26) séparé par rapport au groupe d'articles (28) respectivement devançant, la vitesse de déplacement des entretoises de division (30) étant commandée de manière variable, **caractérisé par le fait que**:

- les entretoises de division (30) plongent d'en haut entre les articles et sont déplacées sur un trajet défini dans la direction de transport (F) des éléments de transport (12, 16),

- les entretoises de division (30), après avoir plongé entre des articles successifs, sont d'abord ralenties par rapport à la deuxième bande transporteuse (18), et, après la formation d'une lacune (24) définie, elles sont accélérées par la vitesse ($v_{F2}$) de la deuxième bande transporteuse (18) avant qu'elles soient soulevées vers le haut pour les sortir de la zone de prise avec les articles,

- ledit dispositif de retenue (20) présente une pluralité d'entretoises de division (30) qui sont guidées, par le biais de moyens de traction sans fin (32) tournants, au-dessus d'un plan de transport des éléments de transport (12, 16) en une courbe fermée et que

- des entretoises de division (30) respectivement successives sont guidées les unes par rapport aux autres à une vitesse relative différente ou bien variable.

**2.** Procédé selon la revendication 1, dans lequel ledit dispositif de retenue (20) présente au moins deux moyens de traction sans fin (32) tournants l'un indépendamment de l'autre, mais parallèlement entre eux, qui guident et déplacent chacun les entretoises de division (30).

**3.** Procédé selon l'une quelconque des revendications 1 ou 2, dans lequel, pour atteindre une vitesse variable des entretoises de division (30) sur leur trajectoire de déplacement, lesdits au moins deux moyens de traction sans fin (32) sont entraînés chacun à une vitesse d'entraînement variable et/ou sont commandés par des cames.

**4.** Dispositif de groupement d'articles, comprenant un premier élément de transport (12) et un deuxième élément de transport (16) qui est placé en aval de celui-ci et se déplace plus rapidement, ainsi qu'un dispositif de retenue (20) qui est associé audit deuxième élément de transport (16) et destiné à séparer un nombre défini d'articles en formant une lacune (24) entre des groupes d'articles (26, 28) successifs et en ralentissant le groupe d'articles (26) séparé par rapport au groupe d'articles (26) respectivement devançant, **caractérisé par le fait que**:

- ledit dispositif de retenue (20) comprend des entretoises de division (30) qui plongent d'en haut entre les articles et peuvent être déplacées sur un trajet défini dans la direction de transport (F) des éléments de transport, une vitesse de déplacement des entretoises de division (30) étant commandable de manière variable,

- les entretoises de division (30), après avoir plongé entre des articles successifs, sont d'abord ralenties par rapport à la deuxième bande transporteuse (16), et, après la formation d'une lacune (24) définie, elles sont accélérées par la vitesse ($v_{F2}$) de la deuxième bande transporteuse (18) avant qu'elles soient soulevées vers le haut pour les sortir de la zone de prise avec les articles,

- ledit dispositif de retenue (20) présente une pluralité d'entretoises de division (30) qui sont guidées, par le biais de moyens de traction sans fin (32) tournants, au-dessus d'un plan de transport des éléments de transport en une courbe fermée et que

- des entretoises de division (30) respectivement successives peuvent être guidées les unes par rapport aux autres à une vitesse relative différente ou bien variable.

**5.** Dispositif selon la revendication 4, dans lequel le dispositif de retenue (20) présente au moins deux moyens de traction sans fin (32) tournants l'un indépendamment de l'autre, mais parallèlement entre eux, qui guident et déplacent chacun les entretoises de division (30).

**6.** Dispositif selon la revendication 4 ou 5, dans lequel, pour atteindre une vitesse variable des entretoises de division (30) sur leur trajectoire de déplacement, lesdits au moins deux moyens de traction sans fin (32) peuvent être entraînés chacun à une vitesse d'entraînement variable et/ou être commandés par des cames.

Fig. 1

EP 2 298 651 B1

Fig. 2

Fig. 3

F

22  22  34

30  20  30

30b  30a  32

12,14  24  28  16,18

10

EP 2 298 651 B1

Fig. 4

Fig. 5

EP 2 298 651 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2929973 A1
- EP 1932782 A1
- WO 2007137923 A1
- EP 0703167 A1